# EUROPÄISCHE PATENTSCHRIFT

(11) **EP 1 462 177 B1**
(45) Veröffentlichungstag und Bekanntmachung des Hinweises auf die Patenterteilung: **26.10.2005**
(21) Anmeldenummer: 04007016.1
(22) Anmeldetag: 24.03.2004
(51) Int. Cl.: B02C 18/22, B02C 23/02, B29C 51/26, B65H 20/16

(54) **Überführungseinrichtung für den Anfang einer Folienbahn oder eines Folienrestgitters von einer Thermoformmaschine zu einer Schneidmühle und Verfahren zum Betreiben der Überführungseinrichtung**
Transfer device for the leading end of a film web or a film matrice from a thermoforming machine to a comminuting mill and method for operating the transfer device
Dispositif de transfert pour le début d'une bande de film ou d'une matrice de film d'une machine de thermoformage à un broyeur déchiqueteur et procédé de fonctionnement du dispositif de transfert

(30) Priorität: 26.03.2003 DE 10313370
(43) Veröffentlichungstag der Anmeldung: 29.09.2004
(73) Patentinhaber: Adolf Illig Maschinenbau GmbH & Co. KG, 74081 Heilbronn (DE)
(72) Erfinder: Trautwein, Herbert, 71737 Kirchberg (DE); Firzlaff, Michael, 74223 Flein (DE)

(56) Entgegenhaltungen:
- EP-A- 0 033 006
- EP-A- 0 836 887
- EP-A- 1 025 978
- EP-A- 1 180 425
- DE-B- 2 604 909
- US-A- 4 643 415

## Beschreibung

Die Erfindung betrifft eine Vorrichtung bestehend aus einer Thermoformmaschine, einer Schneidmühle und einer dazwischenliegenden Überführungseinrichtung nach der Gattung des Hauptanspruches sowie ein Verfahren zum Betreiben der Vorrichtung.

Aus der EP 1 180 425 A1 ist eine Vorrichtung bekannt zum Transportieren einer Folienbahn bei einem Kaschiervorgang und zum Weitertransport des Restgitters nach dem Ausstanzen der kaschierten Teile zu einer Aufwickeleinrichtung bzw. Zerkleinerungsanlage. Die Vorrichtung zeigt zwei horizontal nebeneinander angeordnete Paare von gegeneinander gedrückten Transportbändern zum horizontalen taktweisen Verschieben der Folienbahn bzw. des Restgitters. Hierbei werden die Teile nach dem Kaschiervorgang ausgestanzt und es verbleibt entweder Restgitter nach dem Ausstanzen oder unverformte Folienbahn während des Anfahrens. Die Vorrichtung weist ebenfalls eine Aushebeeinrichtung auf, die die überzogenen und ausgetrennten Teile einer nachfolgenden Handhabungseinrichtung zuführt.
Die Überführungseinrichtung ist speziell für den Transport dünner Folienbahnen konzipiert, wie sie beim Kaschieren verwendet werden. Dickere oder wellige Folienbahnen können mit diesen Transportbändern nicht überführt werden. Ebenso können keine Folienbahnen transportiert werden, die geformte und nicht ausgestanzte Behälter aufweisen. Außerdem ist sie nur für eine horizontale, lineare Überführung von Folienbahnen vorgesehen. Eine Überführungseinrichtung, die schräge Partien oder Richtungswechsel aufweist, ist mit diesem Konzept nicht durchführbar.
Aus der EP 0 836 887 A1 ist weiterhin eine Schneidmühle bekannt, der ein Folienrestgitter von einer Thermoformmaschine aus zugeführt wird. Eine Schwinge dient zum Umsetzen des intermittierenden Betriebes der Thermoformmaschine in den Betriebsablauf der Schneidmühle. Auf die Überführung des Anfanges einer neuen Folienbahn oder eines Folienrestgitters beim Rollenwechsel oder beim Anfahren der Maschinenlinie ist in dieser Schrift nicht eingegangen.
Durch Maschinenlieferungen des Anmelders ist es bekannt, zum Überführen oberhalb der Stapeleinrichtung, die am Auslauf der Thermoformmaschine steht, ein horizontal umlaufendes Förderband anzuordnen. Auf dieses drücken Andrückrollen, sodass eine Mitnahme der dazwischen liegenden Folienbahn oder des Folienrestgitters erfolgt. Diese Andrückrollen sind schwenkbar gestaltet, um Folienbahn oder Folienrestgitter einführen zu können. Das Problem liegt darin, dass das Förderband, da es oberhalb der Stapeleinrichtung verläuft, eine Höhe aufweist, die von einer Bedienungsperson nicht ohne weiteres mit der Hand erreicht werden kann. Fahrbare Podeste sind eine Lösung, die Platz erfordern und bei Nichtverwendung im Wege stehen. Das Einführen des Anfanges einer neuen Folienbahn ist dadurch umständlich, störungsanfällig und erfordert Zeit, weil die Bedienungsperson nicht nur die Folienbahn auf das Förderband überführen, sondern im weiteren Verlauf auch in die Vorschubwalzen der Schneidmühle von Hand einschieben muss. Dazu muss das an der Mühle vorhandene Podest bestiegen werden. Die Bedienungsperson arbeitet an gefährlichen Einzugsstellen und ist dabei einer Verletzungsgefahr ausgesetzt.
Aus der DE 39 00 342 A1 ist ein Wagen bekannt, der abgetrennte Abschnitte einer Werkstoffbahn transportiert und sie dazu mit Zangen festhält. Diese Zangen greifen an der Vorderkante der Materialbahn an und sind deshalb nicht in der Lage, die Vorderkante bis zwischen die beiden angetriebenen Transportwalzen einer Schneidmühle zu transportieren. Sie müssten dazu zwischen den Transportwalzen hindurchgeführt werden, was baulich nicht möglich ist.
Bei der aus der JP 2001-088209 A bekannten Einrichtung erfolgt ein Transport einer verformten Folienbahn zu einer Stanzeinrichtung, jedoch ist nichts ausgesagt, wie das Folienrestgitter zu einer Schneideinrichtung zum Zermahlen geführt wird.
Der Erfindung liegt die Aufgabe zugrunde, den Anfang der Folienbahn oder des Folienrestgitters vom Auslaufbereich der Thermoformmaschine zur Schneidmühle automatisiert, ohne Öffnen der Schutzverkleidung und ohne manuelle Eingriffe des Bedienpersonals zu überführen auch unter Richtungsänderung über den Bauraum von Stapelmaschinen hinweg. Dabei sollten die geschilderten Nachteile vermieden werden und Stellplatz und Kosten erfordernde fest montierte oder fahrbare Podeste sollten nicht erforderlich sein. Es sollten sowohl dünne wie dicke Folienbahnen, ggf. mit noch darin hängenden nicht ausgestanzten Behältern, als auch wellige Folienrestgitter durch die Vorrichtung zur Schneidmühle überführt werden können, wobei Elemente der Vorrichtung diese Behälter so quetschen sollten, dass sie ohne die Gefahr einer Verstopfung der Schneidmühle zugeführt werden können. Die Vorrichtung soll die noch warme Folienbahn bzw. das Folienrestgitter in einer vorteilhaften Ausführung kühlen können, was die Vermahlbarkeit in der Schneidmühle verbessert. Die Unfallgefahr und die Störungsanfälligkeit sollen reduziert werden.

Gelöst ist diese Aufgabe durch die im Kennzeichen des Hauptanspruchs angegebenen Maßnahmen. Weitere bevorzugte Ausgestaltungen der Erfindung ergeben sich aus den übrigen, in den Unteransprüchen genannten Merkmalen.

Die Vorrichtung und das Verfahren zum Betreiben der Vorrichtung sind anhand der schematischen Zeichnungen näher beschrieben. Es zeigt:
- Figur 1: eine Seitenansicht der Vorrichtung mit dem Auslaufbereich der Thermoformmaschine, einer Stapeleinrichtung, einer Schneidmühle und einer Überführungseinrichtung.
- Figur 2: einen Querschnitt durch die Überführungseinrichtung entlang der Linie A-A in Figur 1.
- Figur 3: einen Querschnitt durch die Überführungseinrichtung entlang der Linie B - B in Figur 1.
- Figur 4 + 5: eine Seitenansicht des Auslaufbereichs der Überführungseinrichtung in zwei Ausführungen.
- Figur 6: eine Seitenansicht der Überführungseinrichtung nach einer Variation.
- Figur 7: eine Seitenansicht der Überführungseinrichtung bei der Ausführung mit abkippbaren Führungsschienen.
- Figur 8: eine Seitenansicht einer Variante der Überführungseinrichtung.
- Figur 9: einen Halbschnitt entlang der Linie C - C in Figur 8
- Figur 10 und 11: zwei Varianten einer Vorschubeinrichtung am Auslauf der Überführungseinrichtung.
- Figur 12: einen Querschnitt durch eine Überführungseinrichtung, bestehend aus zwei Transportwalzen.

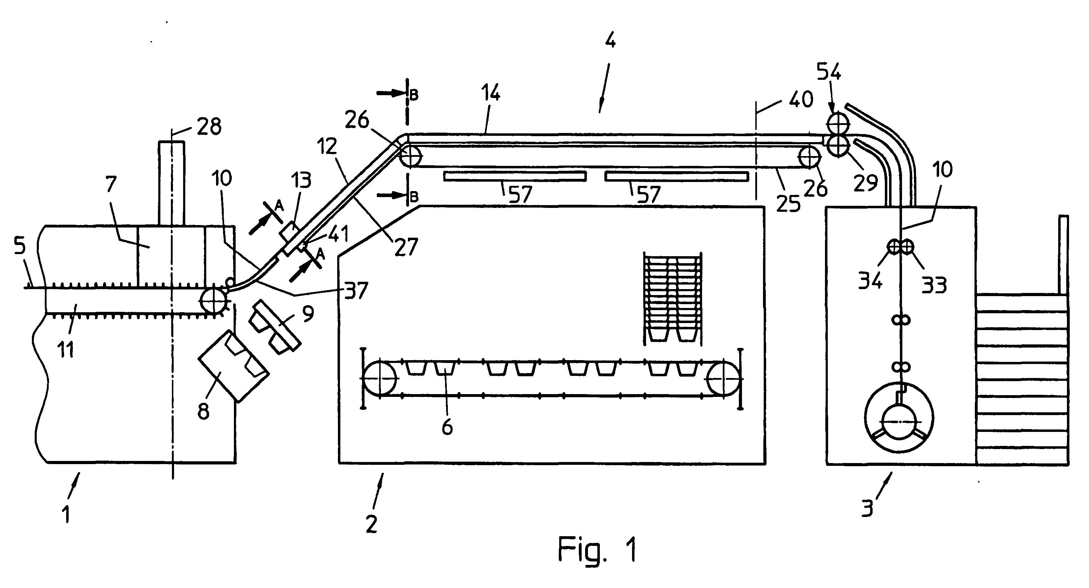

In Figur 1 ist ein Teil einer Maschinenlinie dargestellt, bestehend aus einer Thermoformmaschine 1, einer Handhabungseinrichtung in Form einer Stapeleinrichtung 2, einer Schneidmühle 3 und der Überführungseinrichtung 4, auf die sich die Erfindung bezieht. Aus einer erwärmten Folienbahn 5, intermittierend bewegt von der Transporteinrichtung 11, werden in der kombinierten Form-/Stanzstation 28 Behälter 6 mittels der beiden Werkzeughälften 7, 8 tiefgezogen und ausgestanzt. Die eine Werkzeughälfte 8 ist kippbar gestaltet und die ausgeworfenen Behälter 6 werden von einer Übergabeeinrichtung 9 aufgenommen und an die Stapeleinrichtung 2 übergeben. Diese führt die Behälter 6 je nach den Erfordernissen weiter zu Nachbearbeitungsmaschinen, z. B. zum Bördeln, Bedrucken, Sterilisieren, Verpacken. Das verbleibende Folienrestgitter 10 wird in der Schneidmühle 3 zermahlen.

Beim Einführen einer neuen Folienbahn 5, also beim Rollenwechsel oder beim Anfahren der Maschinenlinie, führt die Transporteinrichtung 11 die Folienbahn 5 bis zum Auslauf der Thermoformmaschine 1 und die Überführungseinrichtung 4 transportiert diesen Anfang der Folienbahn 5 bis zu einer Vorschubeinrichtung 54 am Einlauf der Schneidmühle 3. Startet die Thermoformmaschine bereits, wenn der Anfang der Folienbahn 5 in die Form-/Stanzstation 28 gelangt ist, liegt sofort Folienrestgitter 10 vor.

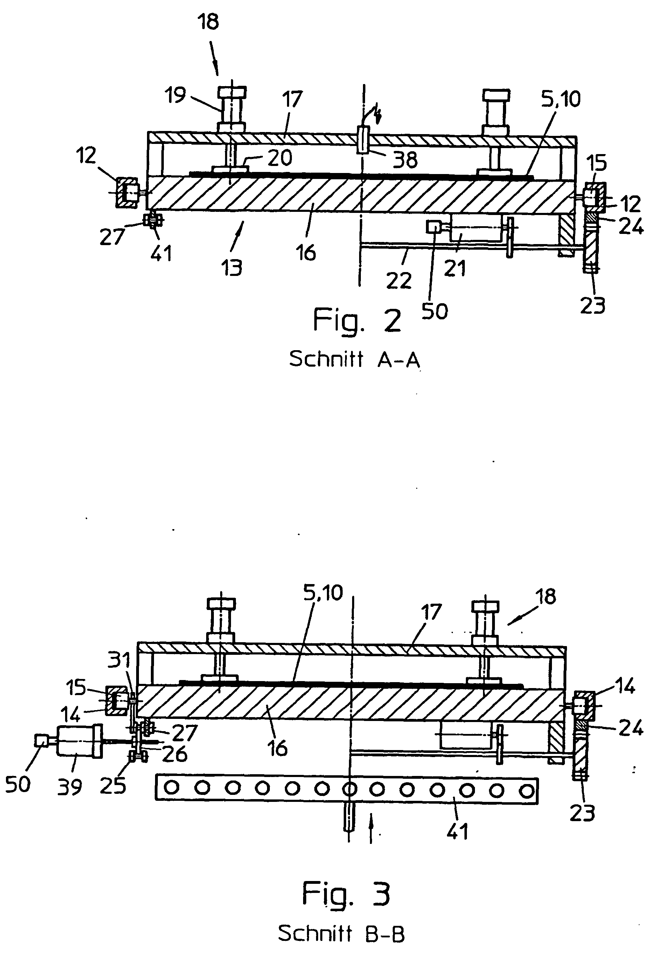

Hierzu weist die Überführungseinrichtung 4 (siehe Fig. 2) Führungen 12 für einen Transportwagen 13 auf, die sich vom Auslaufbereich der Thermoformmaschine 1 schräg nach oben erstrecken bis oberhalb der Stapelmaschine 2. Dort gehen sie über in horizontal verlaufende oder leicht ansteigende Führungen 14, in denen die am Transportwagen 13 angeordneten Rollen 15 weiter geführt sind. Der Transportwagen 13 besteht aus einer Auflageplatte 16, einem auf Abstand dazu angeordneten Quersteg 17, der Klemmeinrichtungen 18 trägt, bestehend aus Antrieb 19 und Klemmplatte 20 und aus Rollen 15, die in den Führungen 12, 14 laufen.
Bezüglich des Antriebes zum Bewegen des Transportwagens 13 sind mehrere Varianten insbesondere in den Figuren 2 und 3 sowie 8 und 9 dargestellt. Die rechte Darstellung in den Figuren 2 und 3 zeigt die Verwendung eines am Transportwagen 13 sitzenden motorischen Antriebes 21, der eine Gleichlaufwelle 22 verdreht, auf der links und rechts je ein Zahnrad 23 sitzt. Diese kämmen in je einer Zahnstange 24, die an den Führungen 12, 14 befestigt ist und bis zum Auslauf der Übergabeeinrichtung 4 verläuft.

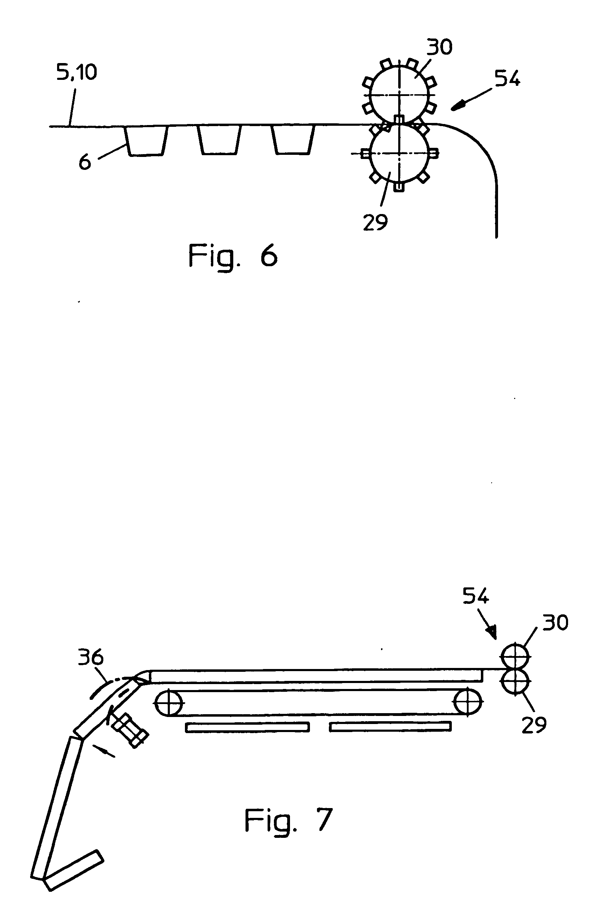

Die Figuren 2 und 3 links sowie Figur 1 zeigen eine zweite Antriebsart für den Transportwagen 13. Im horizontalen Bereich der Überführungseinrichtung 4 verlaufen umlaufende Transportketten 25 über Kettenräder 26, die von einem Antrieb 39 abwechselnd links bzw. rechts verdreht werden. An den beiden umlaufenden Transportketten 25 ist je ein freies Stück einer Kette 27 befestigt, das andererseits am Transportwagen 13 am Haltesteg 41 befestigt ist. Ein Rechtslauf der Kettenräder 26 führt dazu, dass ein beim Auslaufbereich der Thermoformmaschine 1 stehender Transportwagen 13 über die beiden Ketten 27 auf den Führungen 12 nach oben gezogen wird. Diese Ketten 27 ziehen den Transportwagen 13 auch auf dem horizontalen Bereich bis zu den Transportwalzen 29, 30. Eine Zurückbewegung des Transportwagens 13 in Übernahmestellung wird dadurch herbeigeführt, dass an den umlaufenden Transportketten 25 Mitnehmer 31 angeordnet sind, die mit am Transportwagen 13 befestigten Einrichtungen zusammenwirken und diesen formschlüssig auf dem horizontalen Weg mitnehmen, bis er durch Eigengewicht auf den schräg verlaufenden Führungen 12 nach unten fährt. Die Antriebe 21, 39 können jeweils als elektromotorischer Antrieb, vorzugsweise als servomotorischer Antrieb, oder als Pneumatikmotor ausgebildet sein.
Diese zweite Antriebsart des Transportwagens 13 bietet Vorteile, wenn die Führungen 12 ganz oder in Teilbereichen schwenkbar ausgebildet werden, wie es in Figur 7 angedeutet ist. Dieses Schwenken der Führungen 12 erleichtert die Zugänglichkeit der Thermoformmaschine 1 am Auslaufbereich z. B. zum Wechseln des Formwerkzeuges 7, 8. Dazu sind die Führungen 12 als Ganzes schwenkbar ausgebildet oder mehrteilig ausgeführt und die Teilstücke sind gelenkig verbunden. Das Schwenken der Führungen 12 oder ihrer Teilbereiche erfolgt von Hand oder über automatische Antriebe.

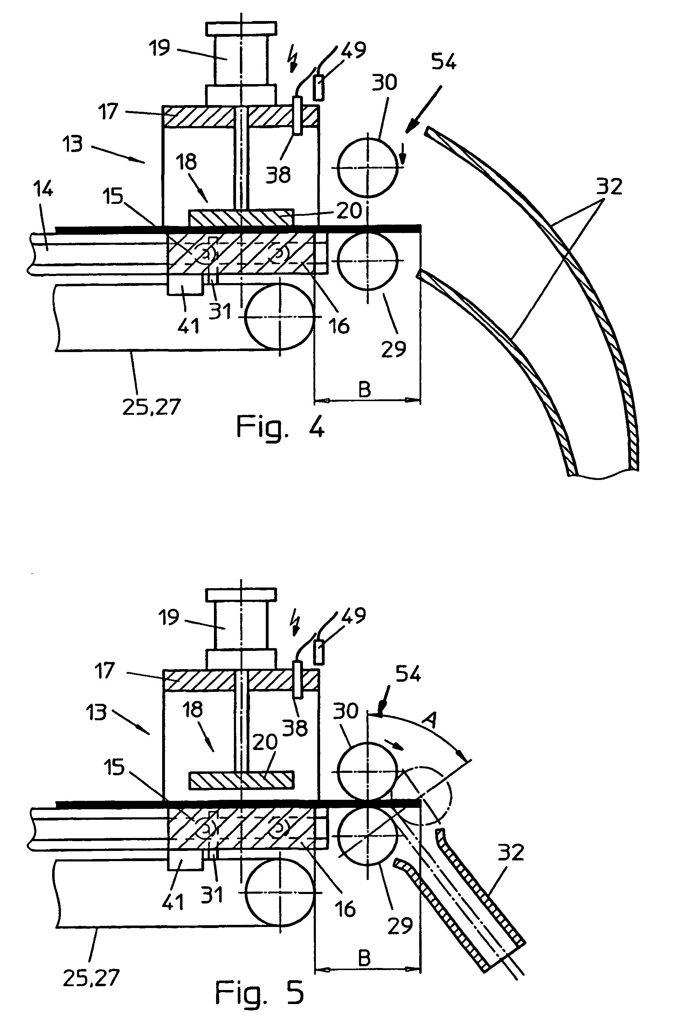

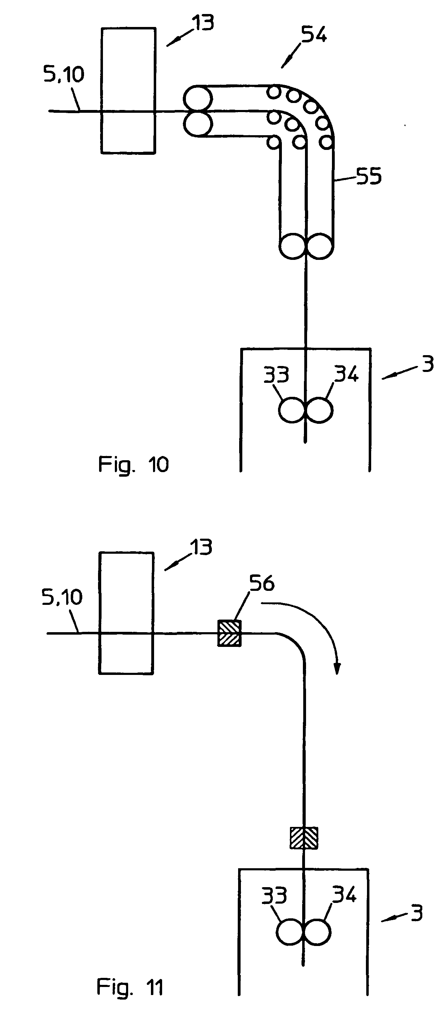

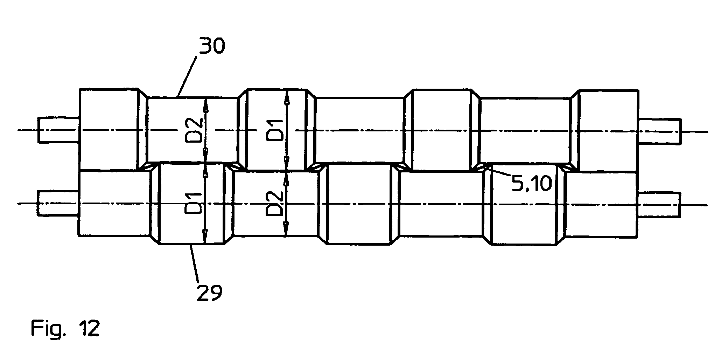

Am Übergangsbereich der horizontalen Führungen 14 zur Schneidmühle 3 ist eine Vorschubeinrichtung 54 angeordnet, die das Folienrestgitter 10 oder die Folienbahn 5 ergreift und der Schneidmühle 3 zuführt. Hierzu weist die Schneidmühle 3 einen Schacht 32 (siehe Figur 4) auf, ferner eigene Transportwalzen 33, 34 zum Weiterschieben des Folienrestgitters 10 oder der Folienbahn 5.
Dabei besteht die Vorschubeinrichtung 54 entweder aus umlaufenden Ketten oder Riemen 55 (Figur 10), aus in Transportrichtung verschiebbaren Klemmbacken 56 (Figur 11) oder aus zwei Transportwalzen 29, 30, die zwischen sich das Folienrestgitter 10 festklemmen und durch Drehung transportieren und der Schneidmühle 3 zuführen. Letztgenannte Ausführung hat den Vorteil, dass im Restgitter 10 hängende Behälter 6 auf einfache Weise zerquetscht und deshalb leichter der Schneidmühle 3 zugeführt werden können.

In besonderer Ausbildung der Erfindung gemäß Ausbildung mit Transportwalzen 29, 30 ist die obere Transportwalze 30 nicht nur abhebbar von der unteren Transportwalze 29, sondern auch um einen Winkel A zwischen 10 und 90° schwenkbar zu dieser ausgebildet, so dass beispielsweise die in Figur 5 gezeigte Stellung bei einem Winkel A von 45° nach dem Erfassen des Anfanges der Folienbahn 5 oder des Folienrestgitters 10 eingenommen werden kann. Diese Stellung erleichtert das Einführen der Folienbahn 5 oder des Folienrestgitters 10 in den Schacht 32 (siehe Figur 5).

Eine vorteilhafte Gestaltung (siehe Figur 7) der Überführungseinrichtung 4 besteht bei Verwendung elektromotorischer Antriebe 21, 39 darin, am Übergang der Führungen 12, 14 einen über einen Antrieb 35 nachgiebig gehaltenen Umlenkbogen 36 oder auch eine entsprechende schwenkbare Umlenkrolle anzuordnen, über die das Folienrestgitter 10 dauernd unter Spannung gehalten wird. Dieser Umlenkbogen 36 steuert die Dauer der Drehbewegung der Transportwalze 29, 30 bzw. 33, 34 bzw. deren Ein- und Abschalten in vorgegebenen Stellungen.

Die Transportwalzen 29, 30 sind gemäß einer vorteilhaften Ausbildung als Quetschwalzen ausgebildet, wozu sie eine raue Oberfläche oder auch vorstehende Stege, Stifte oder Noppen aufweisen. Sie können dadurch ein Folienrestgitter 10 mit noch darin hängenden, also nicht ausgestanzten Behältern 6 (siehe Figur 6) soweit zusammendrücken, dass ein Transportieren mit den zu der Schneideeinrichtung 3 gehörenden Transportwalzen 33, 34 problemlos möglich ist. Eine weitere Gestaltungsmöglichkeit ist in Figur 12 dargestellt. Beide Transportwalzen 29, 30 sind mit mehreren zylindrischen Bereichen mit unterschiedlichem Durchmesser ausgebildet und drücken jeweils aufeinander. Die Folienbahn 5 bzw. das Folienrestgitter 10 werden dadurch in Querrichtung verformt, wodurch die Schwingungsübertragung, hervorgerufen durch die Schneidmühle 3, reduziert wird. Die Vorrichtung strahlt weniger Lärm ab.

Verfahrenstechnisch ist es möglich, die Transportwalzen 29, 30 soweit auf Abstand einzustellen, dass ein glattes Folienrestgitter 10, also ohne darin hängende Behälter 6, nicht berührt wird und der Vorschub alleine durch die Transportwalzen 33, 34 der Schneidmühle 3 erfolgt. Kommt dann ein Stück Folienrestgitter 10 mit noch darin hängenden Behältern 6 werden diese auf die Spaltbreite zwischen den Transportwalzen 29, 30 zusammengedrückt, bevor das Folienrestgitter 10 der Schneidmühle 3 zugeführt wird.

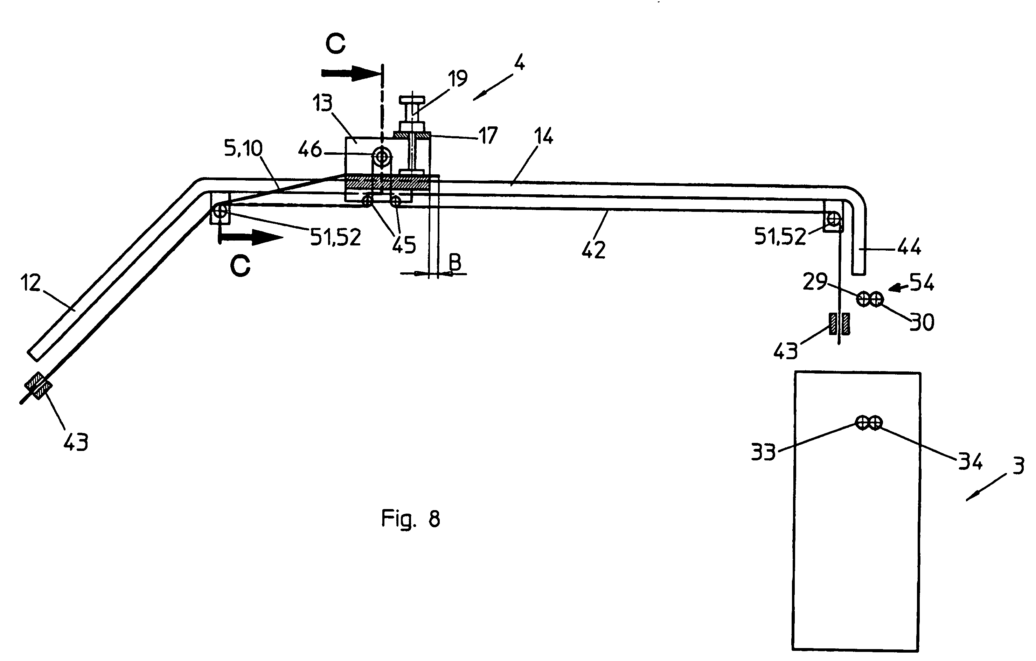

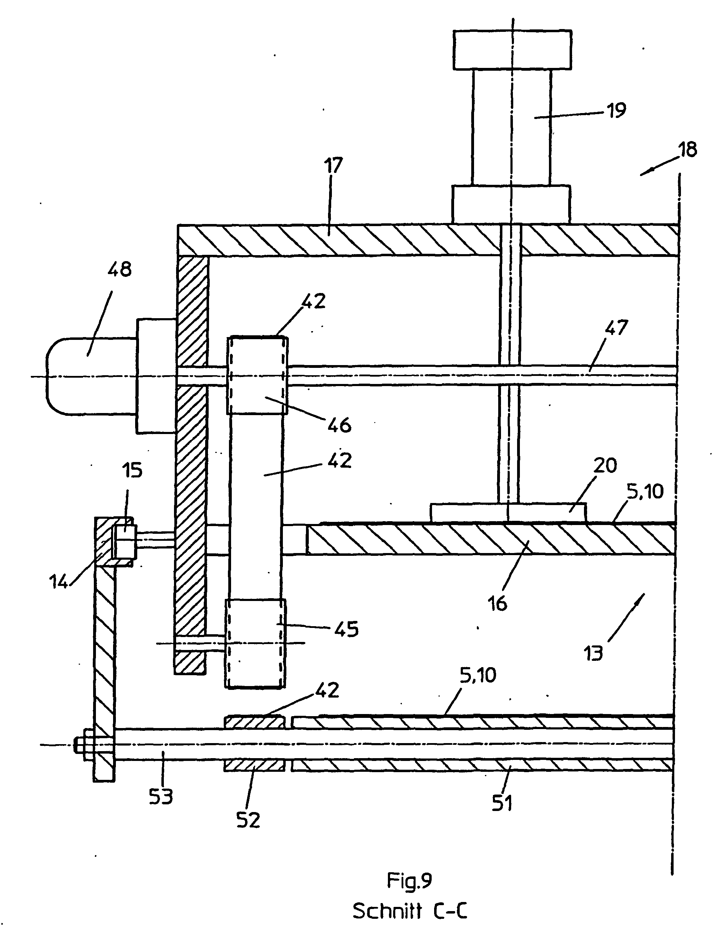

Eine dritte Antriebsart für den Transportwagen 13 ist in den Figuren 8 und 9 dargestellt. Zwei Zahnriemen 42 verlaufen, befestigt an ortsfesten Klemmbacken 43, an beiden Seiten des Transportwagens 13 vom Auslaufbereich der Thermoformmaschine 1 bis zu den Transportwalzen 29, 30, wobei im dargestellten Beispiel die horizontalen Führungen 14 übergehen in vertikale Führungen 44, an deren Ende die Transportwalzen 29, 30 angeordnet sind. Auf diese Weise ist ein einfaches Zuführen von Folienbahn 5 bzw. Folienrestgitter 10 in die vertikale Transportrichtung der Schneidmühle 3 gegeben. Am Transportwagen 13 sitzen auf jeder Seite zwei Umlenkräder 45 und ein Antriebsrad 46, ausgebildet als Zahnriemenscheibe, wobei beide Antriebsräder 46 über eine Gleichlaufwelle 47 verbunden sind und die Zahnriemen 42 jeweils über die Umlenkräder 45 und die Antriebsräder 46 geführt sind. Durch Drehen der Gleichlaufwelle 47 über den am Transportwagen 13 befestigten Antrieb 48 bewegt sich der Transportwagen 13 entlang der Zahnriemen 42 und kann so vom Auslaufbereich der Thermoformmaschine 1, geführt an den Führungen 12, 14, 44, bis zu den Transportwalzen 29, 30 transportiert werden.
Wenn als Antrieb 48 ein Pneumatikmotor eingesetzt ist, hat dies - wie auch bei den beiden anderen Antriebsvarianten - den Vorteil, dass die Folienbahn 5 bzw. das Folienrestgitter 10 automatisch immer unter einer bestimmten Spannung gehalten werden kann, weil dieser Antrieb bei einem vom Luftdruck abhängigen Moment stehen bleibt. Nach jedem Transportschritt der Transporteinrichtung 11 wird die Folienbahn 5 bzw. das Folienrestgitter 10 automatisch weitertransportiert. Da sowieso Druckluft für die Antriebe 19 am Transportwagen 13 zur Verfügung steht, ist der Anschluss leicht möglich und bedarf keiner eigenen Energiezufuhr zum Transportwagen 13. Anstelle der Zahnriemen 42 können auch Rollenketten und entsprechende Kettenräder als Antriebsräder 46 eingesetzt werden. Umlenkwalzen 51, 52 auf einer Querwelle 53 dienen dabei der Umlenkung der Zahnriemen 42 und der Folienbahn 5 oder des Folienrestgitters 10.

Verfahrenstechnisch findet folgender Ablauf beim Einführen einer neuen Folienbahn 5 in die Thermoformmaschine 1 statt. Die Transporteinrichtung 11 der Thermoformmaschine 1 führt die Folienbahn 5 intermittierend bis zum Auslauf und in Richtung des am unteren Ende der Führungen 12 stehenden Transportwagens 13, wozu ein Leitblech 37 unterstützend und hilfreich ist, wobei dieses schwenkbar gestaltet sein kann, um es in eine günstige Position schwenken zu können. Ein am Transportwagen 13 befindlicher Sensor 38 erkennt die Folienbahn 5. Der Antrieb der Transporteinrichtung 15 und der Antrieb 21, 39, 48 des Transportwagens 13 werden entweder synchron betrieben, so dass der Transportwagen 13 immer denselben Weg wie die Folienbahn 5 zurücklegt und diese straff hält. Oder durch Einsatz eines Pneumatikmotors wird eine vorgegebene Vorspannung in Folienbahn 5 oder Folienrestgitter 10 erzeugt und dadurch wird die synchrone Vorschubbewegung erzeugt.
Es werden zwei vorteilhafte Verfahrensabläufe vorgeschlagen, um die Übernahme des Anfanges der Folienbahn 5 oder des Folienrestgitters 10 durch den Transportwagen 13 vorzunehmen, das eine sehr hohe Transportgeschwindigkeit (Größenordnung 1 m/sec) der Transporteinrichtung 11 zulässt und wobei der Anfang der Folienbahn 5 oder des Folienrestgitters 10 einen bestimmten Betrag B über die Auflageplatte 16 vorsteht.

Ein erstes Verfahren besteht darin, die Transporteinrichtung 11 der Thermoformmaschine 1 zu stoppen, wenn der Sensor 38 die Folienbahn 5 bzw. das Folienrestgitter 10 erkennt, so dass nach einem bestimmten Bremsweg oder Nachlaufweg der Überstand B erreicht wird. Jetzt kann die Klemmeinrichtung 18 wirksam werden und Transporteinrichtung 11 und Transportwagen 13 legen synchron den restlichen Transportschritt zurück, bevor der taktweise Betrieb weiterläuft.

Ein zweites Verfahren besteht darin, den Weg der Transporteinrichtung 11 zu messen, der nach dem Erkennungssignal des Anfangs der Folienbahn 5 oder des Folienrestgitters 10 durch den Sensor 38 zurückgelegt wird. Dies setzt einen servomotorischen Antrieb der Transporteinrichtung 11 voraus, der aber heute meist standardmäßig eingebaut ist. Nach Durchführung des Transportschrittes der Transporteinrichtung 11 weiß man deshalb, wieweit der Anfang der Folienbahn 5 oder des Folienrestgitters 10 über den Transportwagen 13 vorsteht. Man bewegt jetzt bei stehender Transporteinrichtung 11 den Transportwagen 13 soweit in Richtung Anfang Folienbahn 5/Folienrestgitter 10, bis der gewünschte Überstand B gegeben ist und betätigt dann die Klemmeinrichtung 18. Dieser Vorgang kann zwischen zwei Transportschritten der Transporteinrichtung 11 erfolgen. Um dieses Verfahren durchführen zu können, ist entweder ein servomotorischer Antrieb 21, 39, 48 erforderlich, der den vorgegebenen Weg genau zurücklegen kann. Oder man benötigt bei Einsatz eines Pneumatikmotors als Antrieb 21, 39, 48 einen Drehgeber 50 (siehe Fig. 2 und 3), der den zurückgelegten Weg des Transportwagens 13 messen und den Antrieb 21, 39, 48 an richtiger Position stoppen kann.

Hat der Transportwagen 13 die Transportwalzen 29, 30 erreicht, wird diese Stellung vorzugsweise von einem ortsfesten Sensor 49 erfasst und der Antrieb 21, 39, 48 gestoppt. Die Transportwalzen 29, 30 übernehmen den Anfang der Folienbahn 5, wobei hier wieder zwei vorteilhafte Verfahrensabläufe vorgeschlagen werden.

Es muss davon ausgegangen werden, dass der Transportwagen 13 während eines Vorschubschrittes der Transporteinrichtung 11 seine Endlage erreicht und das Übergeben an die weiterführende Transporteinrichtung, im dargestellten Fall an die Transportwalzen 29, 30, und das Lösen der Klemmeinrichtung 18 eine gewisse Zeit erfordert.

Gemäß eines ersten Verfahrens wird vorgeschlagen, dass die beiden Transportwalzen 29, 30 zunächst auf Abstand zueinander stehen, wie in Figur 4 dargestellt. Erreicht der Transportwagen 13 seine Endlage, erfasst vom Sensor 49, wird sein Vorschub gestoppt und der restliche Transportweg der Folienbahn 5 bzw. des Folienrestgitters 10 während dieses ablaufenden Taktes durch die Transporteinrichtung 11 ab diesem Zeitpunkt gemessen. Nach dem Einspannen der Folienbahn 5 bzw. des Folienrestgitters 10 durch die aus der Offenstellung in die Schließstellung gebrachten Transportwalzen 29, 30 öffnet die Klemmeinrichtung 18. Inzwischen hat sich eine Folienschlaufe entsprechend des restlichen Weges der Transporteinrichtung 11 gebildet. Man startet jetzt die Drehbewegung der Transportwalzen 29, 30, die einen servomotorischen Antrieb aufweisen müssen, und fährt die Folienbahn 5 oder das Folienrestgitter 10 so weit, wie es dem restlichen zurückgelegten Weg der Transporteinrichtung 11 entspricht. Damit ist die Folienbahn 5 oder das Folienrestgitter 10 wieder straff. Auch dieser Vorgang des Übergebens kann während eines Taktes der Transporteinrichtung 11 erfolgen, so dass ab jetzt wieder synchrone Bewegungen der Transporteinrichtung 11 und der Transportwalzen 29, 30 möglich sind.

Gemäß eines zweiten Verfahrens drehen sich die zusammengedrückten Transportwalzen 29, 30 immer synchron mit der Transportgeschwindigkeit der Transporteinrichtung 11 in der Thermoformmaschine 1 und nehmen den Folienanfang der Folienbahn 5 oder des Folienrestgitters 10 zwischen sich auf, wenn der Transportwagen 13 sich der Endlage annähert. Sowie der Sensor 49 die Endlage meldet wird die Klemmeinrichtung 18 angesteuert und löst die Klemmung.
Eine fliegende Übernahme erfolgt.
Auf diese Weise wird eine Schlaufenbildung zwischen Thermoformmaschine und Transportwalzen 29, 30 vermieden, was zu Störungen durch Brechen der schmalen Zwischenstege eines Folienrestgitters 10 und/oder Einhängen in Bauteilen der Überführungseinrichtung 4 führen kann. Die Schlaufe bildet sich dadurch zwischen den Transportwalzen 29, 30 und der Schneidmühle 3, was den weiteren Vorteil bietet, dass die Schallabstrahlung der Schneidmühle 3 reduziert ist, da ein gespanntes Folienrestgitter 10 den Schall weiterleitet und die Schlaufe dieses Weiterleiten unterbindet.

Der nun nicht mehr benötigte Transportwagen 13 wird in die Parkstation 40 gefahren, angedeutet durch eine strichpunktierte Linie in Figur 1. Bei Einbau von höhenbeweglichen Kühlplatten 57 werden diese jetzt nach oben gefahren, so dass das Folienrestgitter 10 auf diesen aufliegt und abkühlt, wodurch es leichter zermahlen werden kann. Bei Einbau von Kühlplatten 57 hat es sich als vorteilhaft erwiesen, die Führungen 14 leicht ansteigend in Transportrichtung auszubilden, sodass eine gute Anlage der zu kühlenden Folienbahn 5 bzw. des Folienrestgitters 10 gegeben ist.

## Patentansprüche

1. Vorrichtung bestehend aus einer Thermoformmaschine (1) zum Tiefziehen und Ausstanzen von Behältern (6) aus einer erwärmten thermoplastischen Folienbahn (5), einer Stapeleinrichtung (2), einer Schneidmühle (3) zum Zermahlen der Folienbahn (5) oder des Folienrestgitters (10), mit einer im Einlaufbereich der Schneidmühle (3) angeordneten Vorschubeinrichtung (54) zum Festhalten und Weitertransportieren der Folienbahn (5) oder des Folienrestgitters (10) und einer Überführungseinrichtung (4) zum Überführen der Folienbahn (5) oder des Folienrestgitters (10) von der Thermoformmaschine (1) zur Vorschubeinrichtung (54), **dadurch gekennzeichnet, dass** die Überführungseinrichtung (4) einen Transportwagen (13) mit Klemmeinrichtungen (18) zum Festhalten des Anfanges der Folienbahn (5) oder des Folienrestgitters (10) aufweist, und der Transportwagen (13) an Führungen (12, 14, 44) verschiebbar gestaltet ist, welche sich zunächst schräg nach oben bis oberhalb der Stapeleinrichtung (2) erstrecken und dann im Wesentlichen horizontal verlaufen.

2. Vorrichtung nach Anspruch 1, **dadurch gekennzeichnet, dass** der Transportwagen (13) von einem an ihm befestigten motorischen Antrieb (21) bewegt wird, der Zahnräder (23) antreibt, die in an den Führungen (12, 14) befestigten Zahnstangen (24) kämmen.

3. Vorrichtung nach Anspruch 1, **dadurch gekennzeichnet, dass** der Transportwagen (13) von einem ortsfesten motorischen Antrieb (39) bewegt wird, der umlaufende Transportketten (25) antreibt, mit denen der Transportwagen (13) über eine Kette (27) verbunden ist.

4. Vorrichtung nach Anspruch 1, **dadurch gekennzeichnet, dass** der Transportwagen (13) von einem an ihm befestigten Antrieb (48) bewegt wird, der Antriebsräder (46) dreht, über die zwei ortsfest angeordnete, zwischen Auslaufbereich der Thermoformmaschine (1) und Transportwalzen (29, 30) verlaufende Zahnriemen (42) oder Rollenketten geführt sind.

5. Vorrichtung nach einem der Ansprüche 1 bis 4, **dadurch gekennzeichnet, dass** der Antrieb (21, 39, 48) elektromotorisch und synchron mit der Transporteinrichtung (11) der Thermoformmaschine (1) bewegbar ausgebildet ist.

6. Vorrichtung nach einem der Ansprüche 1 bis 4, **dadurch gekennzeichnet, dass** der Antrieb (21, 39, 48) als Pneumatikmotor ausgebildet ist.

7. Vorrichtung nach Anspruch 1, **dadurch gekennzeichnet, dass** die Vorschubeinrichtung (54) aus einem Paar von umlaufenden Riemen oder Ketten (55) besteht

8. Vorrichtung nach Anspruch 1, **dadurch gekennzeichnet, dass** die Vorschubeinrichtung (54) aus einem Paar in Transportrichtung verschiebbarer Klemmbacken (56) besteht.

9. Vorrichtung nach einem der Ansprüche 1 bis 8, **dadurch gekennzeichnet, dass** die Vorschubeinrichtung (54) synchron mit der Transporteinrichtung (11) der Thermoformmaschine (1) bewegbar ausgebildet sind.

10. Vorrichtung nach Anspruch 1, **dadurch gekennzeichnet, dass** die Vorschubeinrichtung (54) aus einem Paar von angetriebenen Transportwalzen (29, 30) besteht.

11. Vorrichtung nach Anspruch 10, **dadurch gekennzeichnet, dass** die Transportwalzen (29, 30) im Abstand zueinander veränderbar ausgebildet sind.

12. Vorrichtung nach einem der Ansprüche 10 oder 11, **dadurch gekennzeichnet, dass** die Transportwalzen (29, 30) als Quetschwalzen mit Stiften, Noppen, Stegen oder rauer Oberfläche ausgebildet sind.

13. Vorrichtung nach einem der Ansprüche 10 bis 12, **dadurch gekennzeichnet, dass** die Transportwalzen (29, 30) Bereiche mit unterschiedlichem Durchmesser (D1, D2) aufweisen, die eine Querverformung der Folienbahn (5) oder des Folienrestgitters (10) bewirken.

14. Vorrichtung nach einem der Ansprüche 10 bis 13, **dadurch gekennzeichnet, dass** die Lage der einen Transportwalzen (30) um einen Winkel (A) zur anderen Transportwalze (29) verändert werden kann.

15. Vorrichtung nach einem der Ansprüche 1 bis 14, **dadurch gekennzeichnet, dass** die horizontalen Führungsschienen (14) übergehen in vertikal verlaufende Führungsschienen (44), an deren Ende die Transportwalzen (29, 30) angeordnet sind.

16. Vorrichtung nach einem der Ansprüche 1 bis 15, **dadurch gekennzeichnet, dass** im Bereich der horizontalen Führungen (14) höhenverschiebbare Kühlplatten (57) angeordnet sind, die in Kontakt mit der Folienbahn (5) oder mit dem Folienrestgitter (10) gebracht werden können.

17. Vorrichtung nach Anspruch 1 bis 16, **dadurch gekennzeichnet, dass** die Führungen (14) in Transportrichtung leicht ansteigend ausgebildet sind.

18. Vorrichtung nach einem der Ansprüche 1 bis 17, **dadurch gekennzeichnet, dass** die Führungsschienen (12) als Ganzes schwenkbar ausgebildet sind oder aus Teilbereichen bestehen, die miteinander gelenkig verbunden sind.

19. Vorrichtung nach einem der Ansprüche 1 bis 18, **dadurch gekennzeichnet, dass** am Übergang der Führungen (12) zu den horizontalen Führungen (14) ein verschiebbarer Umlenkbogen (36) angeordnet ist.

20. Vorrichtung nach einem der Ansprüche 1 bis 19, **dadurch gekennzeichnet, dass** am Transportwagen (13) ein Sensor (38) angeordnet ist, der den Anfang der Folienbahn (5) oder des Folienrestgitters (10) erfasst und das Schließen der Klemmeinrichtung (18) über eine mit ihm in Verbindung stehende Steuerung steuert.

21. Vorrichtung nach einem der Ansprüche 1 bis 20, **dadurch gekennzeichnet, dass** die Vorschubeinrichtung (54) aus einem Paar von angetriebenen Transportwalzen (29, 30) besteht und dass vor den Transportwalzen (29, 30) ein ortsfester Sensor (49) angeordnet ist, der den Transportwagen (13) erfasst und seine Stillsetzung sowie das Öffnen der Klemmeinrichtung (18) über eine mit ihm in Verbindung stehende Steuerung steuert.

22. Verfahren zum Betreiben der Vorrichtung nach Anspruch 20, **dadurch gekennzeichnet, dass** beim Übernehmen des Anfanges der Folienbahn (5) oder des Folienrestgilters (10) der Anfang durch den Sensor (38) erfasst, zeitgleich mit oder kurzzeitig nach dem Erfassen die Transporteinrichtung (11) der Thermoformmaschine (1) gestoppt, die Klemmeinrichtung (18) betätigt und dann über den restlichen noch zurückzulegenden Weg des laufenden Taktes Transportwagen (13) und Transporteinrichtung (11) synchron bewegt werden.

23. Verfahren zum Betreiben der Vorrichtung nach Anspruch 20, **dadurch gekennzeichnet, dass** beim Übernehmen des Anfanges der Folienbahn (5) oder des Folienrestgitters (10) der Anfang durch den Sensor (38) erfasst, der restliche noch zurückgelegte Weg der Transporteinrichtung (11) im laufenden Takt der Thermoformmaschine (1) ermittelt und nach Beendigung der Transportwagen (13) entsprechend in Richtung Anfang der Folienbahn (5) oder Folienrestgitter (10) bewegt, dann gestoppt und die Klemmeinrichtung (18) betätigt wird.

24. Verfahren nach Anspruch 22 oder 23, **dadurch gekennzeichnet, dass** das Klemmen der Folienbahn (5) oder des Folienrestgitter (10) so erfolgt, dass der Anfang um ein Maß (B) über den Transportwagen (13) übersteht.

25. Verfahren zum Betreiben der Vorrichtung nach Anspruch 21, **dadurch gekennzeichnet, dass** zum Übergeben des Anfanges der Folienbahn (5) oder des Folienrestgitters (10) an die - zunächst auf Abstand angeordneten und still stehenden - Transportwalzen (29, 30) der Transportwagen (13) beim Erfassen durch den Sensor (49) über eine mit ihm in Verbindung stehende Steuerung stillgesetzt, die Transportwalzen (29, 30) zusammengefahren werden, die Klemmeinrichtung (18) geöffnet wird, der restliche noch zurückgelegte Weg der Transporteinrichtung (11) im laufenden Taktes der Transporteinrichtung (11) ermittelt und die Transportwalzen (29, 30) soweit verdreht werden, dass die Folienbahn (5) oder das Folienrestgitter (10) um diesen Weg transportiert wird.

26. Verfahren zum Betreiben der Vorrichtung nach Anspruch 21, **dadurch gekennzeichnet, dass** zum Übergeben des Anfanges der Folienbahn (5) oder des Folienrestgitters (10) an die Transportwalzen (29, 30) diese immer synchron mit der Transporteinrichtung (11) der Thermoformmaschine verdreht werden und beim Erkennen des Transportwagens (13) durch den Sensor (49) die Klemmeinrichtung (18) geöffnet wird.

## Claims

1. A device including a thermoforming machine (1) for deep drawing and die cutting containers (6) from a heated thermoplastic foil strip (5), a stacking device (2), a cutting mill (3) for pulverising the foil strip (5) or residual foil screen (10), having a feed device (54) arranged in the infeed area of the cutting mill (3) for securing and transporting the foil strip (5) or residual foil screen (10), and a transfer device (4) for transferring the foil strip (5) or residual foil screen (10) from the thermoforming machine (1) to the feed device (54), **characterized in that** the transfer device (4) is equipped with a transport carriage (13) with clamping means (18) for securing the leading edge ff the foil strip (5) or residual foil screen (10), and the transport carriage (13) is designed to be movable on rails (12, 14, 44), which initially are inclined upwards to a point above the stacking device (2) and then extend essentially horizontally.

2. The device according to claim 1, **characterized in that** the transport carriage (13) is moved by a motorised drive (21) that is attached thereto, and which drives gears (23), which engage with toothed racks (24) that are attached to the rails.

3. The device according to claim 1, **characterized in that** the transport carriage (13) is moved by a stationary motorised drive (39), which drives circulating transport chains (25), with which the transport carriage (13) is connected via a chain (27).

4. The device according to claim 1, **characterized in that** the transport carriage (13) is moved by a drive (48) that is attached thereto, and which turns drive wheels (46), over which two stationary toothed belts (42) or roller chains running between the outfeed area of the thermoforming machine (1) and the transport rollers (29, 30) are passed.

5. The device according to any of claims 1 to 4, **characterized in that** the drive (21, 39, 48) is designed to be movable by electromotive means and synchronously with the transport device (11) of the thermoforming machine (1).

6. The device according to any of claims 1 to 4, **characterized in that** the drive (21, 39, 48) is constructed as a pneumatic motor.

7. The device according to claim 1, **characterized in that** the feed device (54) includes a pair of circulating belts or chains (55).

8. The device according to claim 1, **characterized in that** the feed device (54) includes a pair of clamping jaws (56) that are movable in the direction of transport.

9. The device according to any of claims 1 to 8, **characterized in that** the feed device (54) is designed to be movable synchronously with the transport device (11) of the thermoforming machine (1).

10. The device according to claim 1, **characterized in that** the feed device (54) includes a pair of driven transport rollers (29, 30).

11. The device according to claim 10, **characterized in that** the transport rollers (29, 30) are constructed so that the distance between them is variable.

12. The device according to either of claims 10 or 11, **characterized in that** the transport rollers (29, 30) are constructed as pinch rollers with pins, knobs, ridges, or a rough surface.

13. The device according to any of claims 10 to 12, **characterized in that** the transport rollers (29, 30) include areas with variable diameter (D1, D2), which cause transverse deformation of the foil strip (5) or residual foil screen (10).

14. The device according to any of claims 10 to 13, **characterized in that** the position of the one transport roller (30) can be altered by an angle (A) relative to the other transport roller (29).

15. The device according to any of claims 1 to 14, **characterized in that** the horizontal guide rails (14) transition into vertical guide rails (44), and the transport rollers (29, 30) are arranged at the ends thereof.

16. The device according to any of claims 1 to 15, **characterized in that** height-adjustable cooling plates (57) are arranged in the area of the horizontal guides (14), and can be brought into contact with the foil strip (5) or residual foil screen (10).

17. The device according to any of claims 1 to 16, **characterized in that** the guides (14) are inclined slightly upwards in the direction of transport.

18. The device according to any of claims 1 to 17, **characterized in that** the guide rails (12) are designed to be pivotable as a single unit or are made from sections that are connected in articulated manner.

19. The device according to any of claims 1 to 18, **characterized in that** a displaceable deflection guide (36) is arranged at the transition from the guide rails (12) to the horizontal guides (14).

20. The device according to any of claims 1 to 19, **characterized in that** a sensor (38) is arranged on the transport carriage (13), which detects the leading edge of the foil strip (5) or residual foil screen (10) and controls the closure of the clamping means (18) via a controller that is connected therewith.

21. The device according to any of claims 1 to 20, **characterized in that** the feeding device (54) includes a pair of driven transport rollers (29, 30) and a stationary sensor (49) is arranged before the transport rollers (29, 30) and detects the transport carriage (13) and controls stopping thereof and the opening of the clamping means (18) via a controller that is connected therewith.

22. A method for operating the device according to claim 20, **characterized in that** during transfer of the leading edge of the foil strip (5) or residual foil screen (10), the leading edge is detected by the sensor (38), the transport device (11) of the thermoforming machine (1) is stopped at the same time or shortly after such detection, the clamping means (18) is actuated and then the transport carriage (13) and the transport device (11) are moved synchronously over the remaining traverse in the current cycle.

23. The method for operating the device according to claim 20, **characterized in that** during transfer of the leading edge of the foil strip (5) or residual foil screen (10), the leading edge is detected by the sensor (38), the rest of the traverse covered by the transport device (11) in the current cycle of the thermoforming machine (1) is calculated and at the end thereof the transport carriage (13) is moved accordingly towards the leading edge of the foil strip (5) or residual foil screen (10), is then stropped and the clamping means (18) is actuated.

24. The method according to claims 22 or 23, **characterized in that** the foil strip (5) or residual foil screen (10) is clamped in such manner that the leading edge overhangs the transport carriage (13) by a dimension (B).

25. The method for operating the device according to claim 21, **characterized in that** in order to transfer the leading edge of the foil strip (5) or residual foil screen (10) to the transport rollers (29, 30) - which are initially located at a distance and stationary -, the transport carriage (13) is stopped upon detection by the sensor (49) via a controller that is connected therewith, the transport rollers (29, 30) are moved together, the clamping means (18) is opened, the remaining traverse travelled by transport device (11) during the current cycle of the transport device (11) is determined and the transport rollers (29, 30) are turned until the foil strip (5) or residual foil screen (10) has been advanced by this distance.

26. The method for operating the device according to claim 21, **characterized in that** in order to transfer the leading edge of the foil strip (5) or residual foil screen (10) to the transport rollers (29, 30), these always rotate synchronously with the transport device (11) of the thermoforming machine and the clamping means (18) is opened when the transport carriage (13) is detected by the sensor (49).

## Revendications

1. Dispositif composé d'une machine de thermoformage (1) pour l'emboutissage et l'estampage de récipients (8) dans une bande de matière plastique chauffée (5), d'un dispositif d'empilage (2), d'une broyeuse-découpeuse (3) servant à broyer la bande de film (5) ou le treillis de film résiduel (10), comportant un dispositif d'avance (54) disposé dans la zone d'entrée dans la broyeuse-découpeuse (3) et servant à maintenir et à transporter plus loin la bande de film (5) ou le treillis de film résiduel (10) et d'un dispositif de transfert (4) servant à transférer la bande de film (5) ou le treillis de film résiduel (10) de la machine de thermoformage (1) vers le dispositif d'avance (54), **caractérisé en ce que** le dispositif de transfert (4) comprend un chariot de transport (13) équipé de dispositifs de serrage (18) pour maintenir le début de la bande de film (5) ou du treillis de film résiduel (10), et que le chariot de transport (13) est conçu de manière à pouvoir se déplacer sur des guides (12, 14, 44) qui s'étendent d'abord à l'oblique vers le haut jusqu'au dessus du dispositif d'empilage (2) et ensuite sensiblement à l'horizontale.

2. Dispositif selon la revendication 1, **caractérisé en ce que** le chariot de transport (13) est mu par une commande motorisée (21) fixée dessus et qui entraîne des roues dentées (23) qui s'empeignent sur des crémaillères (24) fixées aux guides (12, 14).

3. Dispositif selon la revendication 1, **caractérisé en ce que** le chariot de transport (13) est mu par une commande motorisée fixe (39) qui entraîne des chaînes transporteuses en rotation (25) auxquelles le chariot de transport (13) est relié par une chaîne (27).

4. Dispositif selon la revendication 1, **caractérisé en ce que** le chariot de transport (13) est mu par une commande (21) fixée dessus qui fait tourner des roues motrices (46) sur lesquelles sont guidées deux courroies dentées (42) ou chaînes à rouleaux placées à un emplacement fixe et s'étendant entre la zone de sortie de la machine de thermoformage (1) et le chariot de transport (29, 30).

5. Dispositif selon une des revendications 1 à 4, **caractérisé en ce que** la commande (21, 39, 48) est électromotorisée et mobile de manière synchrone avec le dispositif de transport (11) de la machine de thermoformage (1).

6. Dispositif selon une des revendications 1 à 4, **caractérisé en ce que** la commande (21, 39, 48) se présente sous forme d'un moteur pneumatique.

7. Dispositif selon la revendication 1, **caractérisé en ce que** le dispositif d'avance (54) est composé d'une paire de courroies ou chaînes (55) en rotation.

8. Dispositif selon la revendication 1, **caractérisé en ce que** le dispositif d'avance (54) est composé d'une paire de mors de serrage (56) déplaçables dans le sens de transport.

9. Dispositif selon une des revendications 1 à 8, **caractérisé en ce que** le dispositif d'avance (54) est réalisé de manière à pouvoir se déplacer de manière synchrone avec le dispositif de transport (11) de la machine de thermoformage (1).

10. Dispositif selon la revendication 1, **caractérisé en ce que** le dispositif d'avance (54) est composé d'une paire de cylindres de transport entraînés (29, 30).

11. Dispositif selon la revendication 10, **caractérisé en ce que** les cylindres de transport (29, 30) sont réalisés de manière à ce que leur espacement soit modifiable.

12. Dispositif selon une des revendications 10 ou 11, **caractérisé en ce que** les cylindres de transport (29, 30) sont réalisés sous forme de cylindres d'écrasement pourvus de pointes, d'excroissances, de traverses ou d'une surface rugueuse.

13. Dispositif selon une des revendications 10 à 12, **caractérisé en ce que** les cylindres de transport (29, 30) présentent des zones à diamètres différents (D1, D2) qui entraînent une déformation transversale de la bande de film (5) ou du treillis de film résiduel (10).

14. Dispositif selon une des revendications 10 à 13, **caractérisé en ce que** la position d'un des cylindres de transport (30) peut être modifiée d'un angle (A) par rapport à un autre cylindre de transport (29).

15. Dispositif selon une des revendications 1 à 14, **caractérisé en ce que** les rails de guidage horizontaux (14) transitent vers des rails de guidage s'étendant verticalement (44) à l'extrémité desquels sont disposés les cylindres de transport (29, 30).

16. Dispositif selon une des revendications 1 à 15, **caractérisé en ce qu'**au niveau des guides horizontaux (14), sont disposées des plaques de refroidissement déplaçables en hauteur (57) qui peuvent être amenées en contact avec la bande de film (5) ou avec le treillis de film résiduel (10).

17. Dispositif selon les revendications 1 à 16, **caractérisé en ce que** les guides (14) montent légèrement dans le sens de transport.

18. Dispositif selon une des revendications 1 à 17, **caractérisé en ce que** les rails de guidage (12) sont pivotables dans leur ensemble ou sont composés de zones partielles qui sont reliées entre elles de manière articulée.

19. Dispositif selon une des revendications 1 à 18, **caractérisé en ce qu'**à la transition des guides (12) vers les guides horizontaux (14), un coude d'inversion déplaçable (36) est disposé.

20. Dispositif selon une des revendications 1 à 19, **caractérisé en ce que**, sur le chariot de transport (13), est disposé un capteur (38) qui détecte le début de la bande de film (5) ou du treillis de film résiduel (10) et commande la fermeture du dispositif de serrage (18) par l'intermédiaire d'une commande avec laquelle il est en liaison.

21. Dispositif selon une des revendications 1 à 20, **caractérisé en ce** le dispositif d'avance (54) est composé d'une paire de cylindres de transport entraînés (29, 30) et qu'avant les cylindres de transport (29, 30), est disposé un capteur fixe (49) qui détecte le chariot de transport (13) et commande son immobilisation ainsi que l'ouverture du dispositif de serrage (18) par l'intermédiaire d'une commande avec laquelle il est en liaison.

22. Procédé d'exploitation du dispositif selon la revendication 20, **caractérisé en ce qu'**à la prise en charge du début de la bande de film (5) ou du treillis de film résiduel (10), le début est détecté par le capteur (38), le dispositif de transport (11) de la machine de thermoformage (1) est stoppé en même temps ou peu après la détection, le dispositif de serrage (18) est actionné et le chariot de transport (13) et le dispositif de transport (11) sont ensuite déplacés de manière synchrone sur le trajet résiduel encore à parcourir de l'impulsion en cours.

23. Procédé d'exploitation du dispositif selon la revendication 20, **caractérisé en ce qu'**à la prise en charge du début de la bande de film (5) ou du treillis de film résiduel (10), le début est détecté par le capteur (38), le trajet résiduel encore parcouru par le dispositif de transport (11) dans l'impulsion en cours de la machine de thermoformage (1) est déterminé et, une fois terminé, le chariot de transport (13) est déplacé en conséquence en direction du début de la bande de film (5) ou du treillis de film résiduel (10), puis est stoppé et que le dispositif de serrage (18) est actionné.

24. Procédé selon la revendication 22 ou 23, **caractérisé en ce que** le serrage de la bande de film (5) ou du treillis de film résiduel (10) a lieu de manière à ce que le début dépasse du chariot de transport (13) d'une distance (B).

25. Procédé d'exploitation du dispositif selon la revendication 21, **caractérisé en ce que**, pour transférer le début de la bande de film (5) ou du treillis de film résiduel (10) sur les cylindres de transport (29, 30) -d'abord disposés à distance et à l'arrêt- sur les cylindres de transport (29, 30), le chariot de transport (13), à sa détection par le capteur (49), est immobilisé par une commande avec laquelle il est en liaison, les cylindres de transport (29, 30) sont rapprochés les uns des autres, le dispositif de serrage (18) est ouvert, le trajet résiduel encore parcouru par le dispositif de transport (11) dans l'impulsion en cours du dispositif de transport (11) est déterminé et les cylindres de transport (29, 30) tournent jusqu'à ce que la bande de film (5) ou le treillis de film résiduel (10) ait été transporté sur ce trajet.

26. Procédé d'exploitation du dispositif selon la revendication 21, **caractérisé en ce que**, pour transférer le début de la bande de film (5) ou du treillis de film résiduel (10) aux cylindres de transport (29, 30), ceux-ci tournent toujours de manière synchrone avec le dispositif de transport (11) de la machine de thermoformage et qu'à la détection du chariot de transport (13) par le capteur (49), le dispositif de serrage (18) s'ouvre.
